# EUROPÄISCHE PATENTSCHRIFT

(11) **EP 1 820 696 B1**
(45) Veröffentlichungstag und Bekanntmachung des Hinweises auf die Patenterteilung: **07.04.2010**
(21) Anmeldenummer: 07001699.3
(22) Anmeldetag: 26.01.2007
(51) Int. Cl.: B60R 3/02

(54) **Schwenktritt für eine Türanordnung an einem Fahrzeug des öffentlichen Personennahverkehrs**
Swivel step for door assembly in a vehicle for local public transport
Pédale de pivotement pour un agencement de porte sur un véhicule de transport public suburbain de personnes

(30) Priorität: 16.02.2006 DE 202006002455 U
(43) Veröffentlichungstag der Anmeldung: 22.08.2007
(73) Patentinhaber: Gebr. Bode GmbH & Co. KG, 34123 Kassel (DE)
(72) Erfinder: Latendorf, Ingo, 37235 Hessisch-Lichtenau (DE); Horst, Grein, 34637 Schrecksbach (DE)
(74) Vertreter: Bauer Vorberg Kayser Patentanwälte

(56) Entgegenhaltungen:
- DE-C1- 10 033 151
- FR-A1- 2 827 233
- GB-A- 2 055 705
- US-A- 3 861 713

## Beschreibung

Die Erfindung betrifft einen Schwenktritt für eine Türanordnung an einem Fahrzeug des öffentlichen Personenverkehrs mit den Merkmalen aus dem Oberbegriff des Patentanspruchs 1.

Ein derartiger Schwenktritt ist bekannt und beispielsweise in DE 10033151 C1 beschrieben. Bei dem bekannten Schwenktritt stützt sich die Trittstufe in der ausgeschwenkten Funktionsposition bei Trittbelastung auf dem Türschweller ab. Dies hat zur Folge, dass die Schwenkebene der Trittstufe notwendig unmittelbar über dem Türschweller liegen muß und die Lagerung der Trittstufe so erfolgen muß, dass bei Trittbelastung eine Bewegung der Trittstufe in einer vertikalen Ebene erfolgt.

Der Erfindung liegt die Aufgabe zugrunde, einen Schwenktritt mit den Merkmalen aus dem Oberbegriff des Patentanspruchs 1 so auszubilden, dass die Anordnung der Trittstufe und ihrer Schwenkebene flexibler ausgestaltet werden kann und die Lagerung der Trittstufe in konstruktiv einfacherer Weise erfolgen kann.

Die Lösung dieser Aufgabe erfolgt erfindungsgemäß mit den Merkmalen aus dem kennzeichnenden Teil des Patentanspruchs 1. Vorteilhafte Weiterbildungen der Erfindung sind in den abhängigen Ansprüchen beschrieben.

Ein Grundgedanke der Erfindung besteht darin, die Trittstufe in der ausgeschwenkten Position nicht auf der Oberseite des Türschwellers abzustützen, sondern über einen an ihr angeordneten Abstützarm an der Unterseite eines am Fahrzeug-Chassis fest angeordneten Stützlagers. Dieses Stützlager kann so ausgebildet sein, dass die Höhe der Abstützfläche einstellbar veränderbar ist und so justiert werden kann, dass ein am Abstützarm angeordnetes Gegenlager sich bei der Bewegung der Trittstufe in die ausgeschwenkte Funktionsposition direkt an das Stützlager anglegt. Damit wird erreicht, dass die Schwenkbewegung der Trittstufe ausschließlich in einer horizontalen Ebene erfolgt und keine Abstützung von unten, also etwa durch den Türschweller, erforderlich ist.

Die Schwenkbewegung der Trittstufe kann in an sich bekannter Weise über ein Anlenkgestänge mit dem Türblatt der Türanordnung gekoppelt sein.

Im Folgenden wird anhand der beigefügten Zeichnungen ein Ausführungsbeispiel für einen Schwenktritt nach der Erfindung näher erläutert.

In den Zeichnungen zeigen:
- Fig. 1: in einer perspektivischen Darstellung aus dem Fahrzeuginneren gesehen einen Schwenktritt in der eingeschwenkten Ruheposition der Trittstufe;
- Fig. 2: den Schwenktritt gemäß Fig. 1 in einer Ansicht von oben;
- Fig. 3: in einer Darstellung analog Fig. 1 den Schwenktritt in der ausgeschwenkten Funktionsposition der Trittstufe;
- Fig. 4: den Schwenktritt nach Fig. 3 in einer Ansicht von oben;

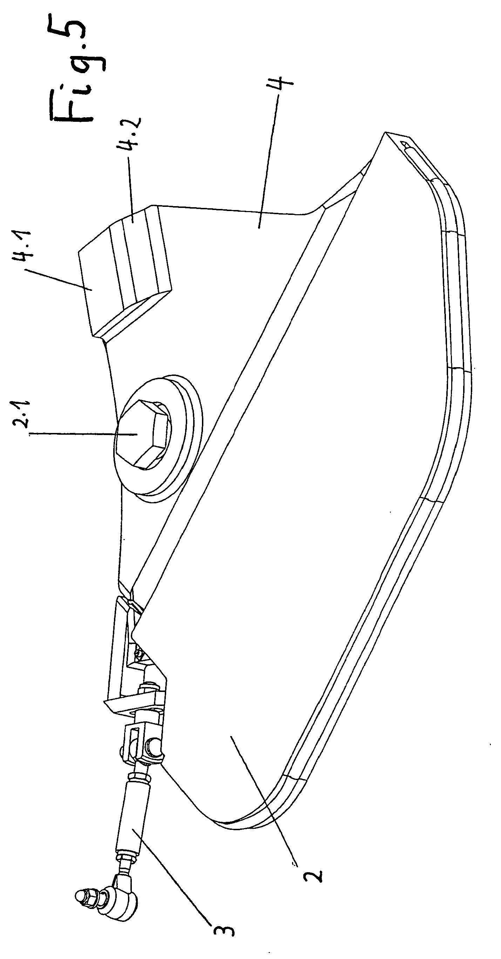

- Fig. 5: in einer perspektivischen Aufsicht den von der Türanordnung getrennten Schwenktritt;

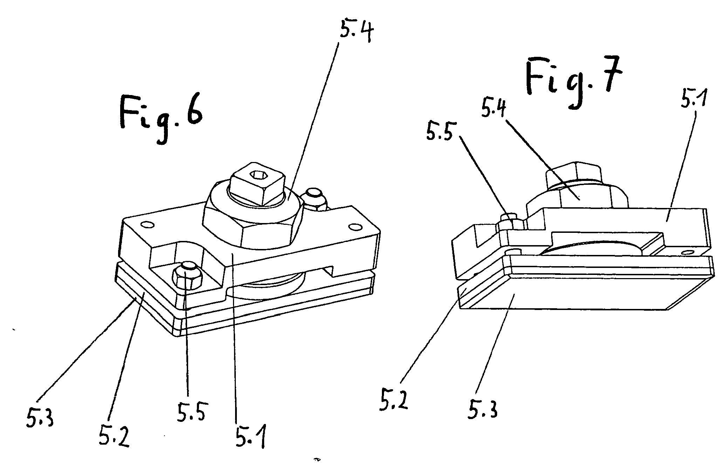

- Fig. 6: das Stützlager des Schwenktritts nach Fig. 1 bis 4 in einer perspektivischen Ansicht von oben;
- Fig. 7: das Stützlager nach Fig. 6 in einer perspektivischen Ansicht auf die Unterseite.

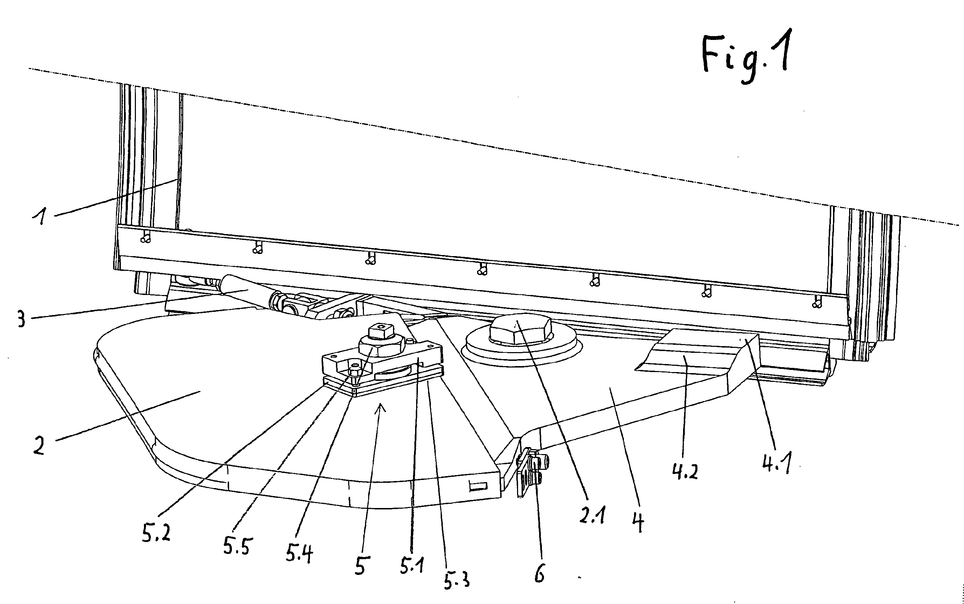

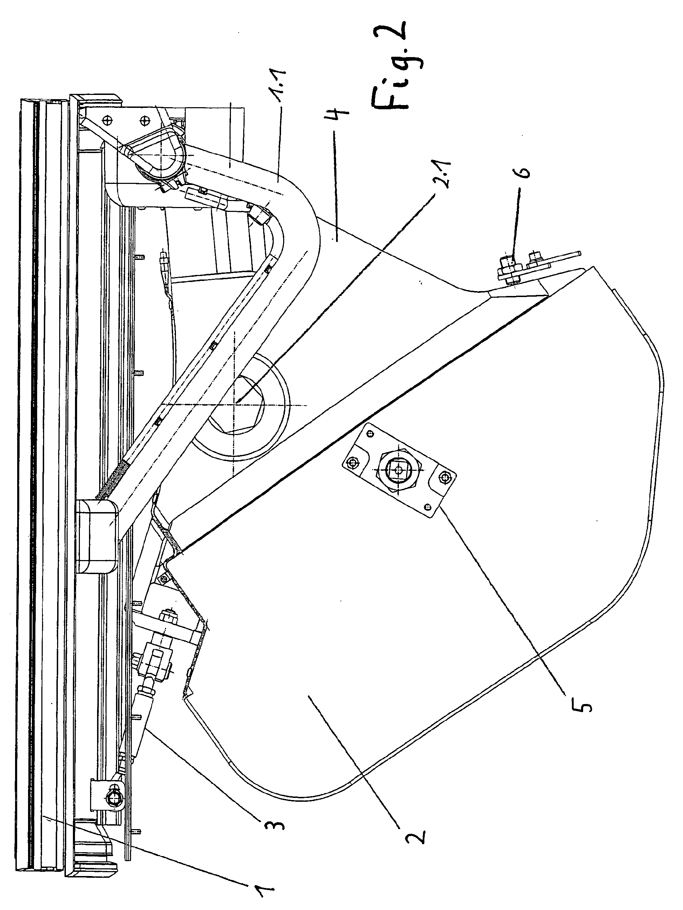

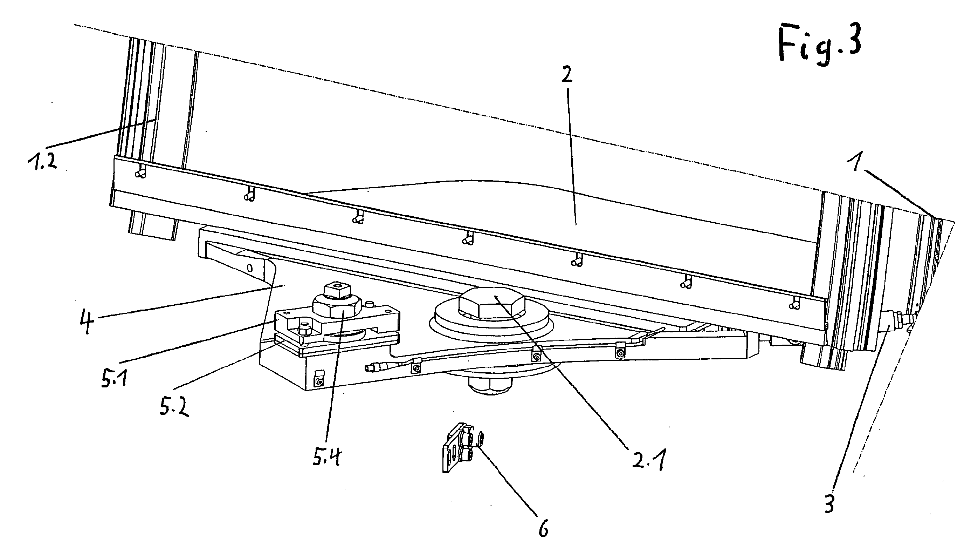

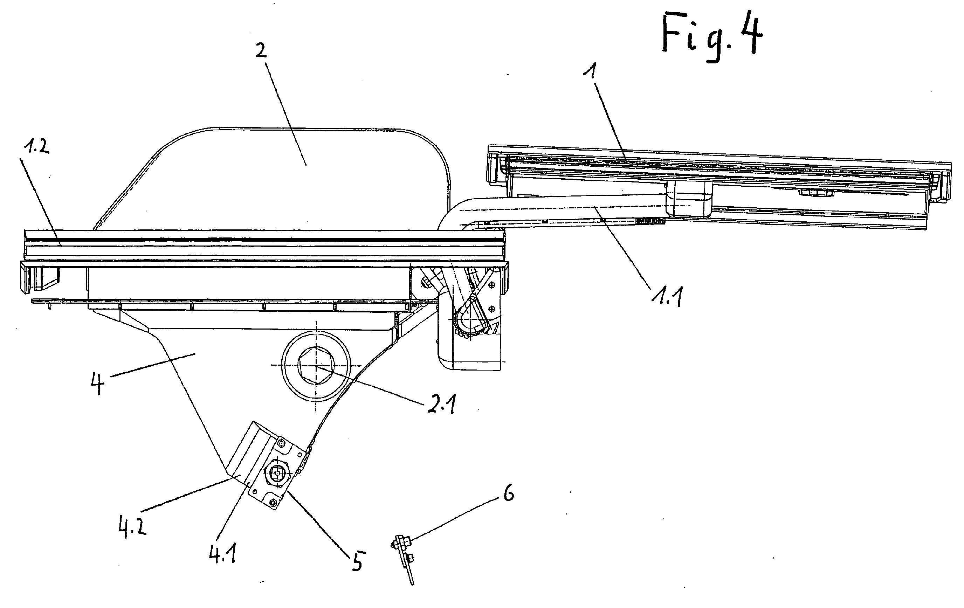

In den Fig. 1 bis 4 ist eine Türanordnung an einem ansonsten nicht dargestellten Fahrzeug des öffentlichen Personennahverkehrs, beispielsweise einem Bus, in ihrem unteren Bereich dargestellt mit einem Türblatt 1, das von einem nicht dargestellten Türantrieb mittels eines Schenkarms 1.1 aus einer in den Fig. 1 und 2 dargestellten geschlossenen Stellung, in der das Türblatt 1 innerhalb des Türportals 1.2 liegt, nach außen in eine in den Fig. 3 und 4 dargestellte Offenstellung bewegbar ist.

Um das Ein-/Aussteigen zu erleichtern, ist unterhalb der Türanordnung ein Schwenktritt angeordnet mit einer Trittstufe 2, die um eine am nicht dargestellten Fahrzeug-Chassis gelagerte, vertikale Schwenkachse 2.1 aus einer in den Fig. 1 und 2 dargestellten eingeschwenkten Ruheposition in eine in den Fig. 3 und 4 dargestellte ausgeschwenkte Funktionsposition bewegbar ist.

Aus Gründen der Übersichtlichkeit ist in den Fig. 1 bis 4 das gesamte Fahrzeug-Chassis nicht dargestellt, sondern lediglich die am Fahrzeug-Chassis angeordnete Teile, die für die Funktionsweise des Schwenktritts wesentlich sind. Die Bewegung der Trittstufe 2 um die vertikale Schwenkachse 2.1 erfolgt ausschließlich in einer horizontalen Ebene. Zur Einleitung der Schwenkbewegung der Trittstufe 2 beim Ein-/Ausschwenken ist diese über ein Anlenkgestänge 3 mit dem Türblatt 1 gekoppelt.

An der Trittstufe 2 ist ein Abstützarm 4 fest angeordnet und so ausgerichtet, dass er bei der Bewegung der Trittstufe 2 in die ausgeschwenkte Funktionsposition (Fig. 3 und 4) in den Bereich unterhalb eines am Fahrzeug-Chassis angeordneten Stützlagers 5 einschwenkt, an dem in der ausgeschwenkten Funktionsposition der Abstützarm 4 und damit die Trittstufe 2 abgestützt werden. Das Stützlager 5 besitzt eine über eine Schraubverbindung fest mit dem Fahrzeug-Chassis verbundene Grundplatte 5.1, an deren Unterseite eine Abstützplatte 5.2 angeordnet ist, deren nach unten gerichtete Abstützfläche mit einer Kunststoffschicht 5.3 beschichtet ist. Über eine Stellschraube 5.4 ist der Abstand der Abstützplatte 5.2 von der Grundplatte 5.1 in vertikaler Richtung einstellbar und durch weitere Schraubverbindunen 5.5. fixierbar.

An der Oberseite des Abstützarms 4 ist in dem Bereich, der in der ausgeschwenkten Funktionsposition der Trittstufe 2 direkt unterhalb des Stützlagers 5 liegt, ein gegenüber der Oberseite des Abstützarms 4 erhöhtes Gegenlager 4.1 angeordnet. Die Höheneinstellung der Abstützplatte 5.2 des Stützlagers 5 kann so eingestellt sein, dass sich dieses Gegenlager 4.1 in der Funktionsposition der Trittstufe 2 an die Unterseite der Abstützplatte 5.2 anlegt. Um das Gegenlager 4.1 bei der Ausschwenkbewegung der Trittstufe 2, also dem Einschwenken des Abstützarms 4 unter die Abstützplatte 5.2, zu führen, ist an der Oberseite des Abstützarms 4 unmittelbar vor dem Gegenlager 4.1 eine nach oben weisende, in Richtung auf die Oberfläche des Gegenlagers 4.1 und einem vorgegebenen Winkel ansteigende und an diese anschließende Aufgleitfläche 4.2 angeordnet.

Weiterhin ist am Fahrzeug-Chassis eine Zentriervorrichtung 6 angeordnet, an der sich die Trittstufe 2 in ihrer unter das Fahrzeug-Chassis eingeschwenkten Ruheposition über einen federbelasteten Druckzapfen abstützt und in ihrer Lage zentriert wird.

## Patentansprüche

1. Schwenktritt für eine Türanordnung an einem Fahrzeug des öffentlichen Personennahverkehrs mit einer Trittstufe (2), die um eine am Fahrzeug-Chassis gelagerte vertikale Schwenkachse (2.1) aus einer eingeschwenkten Ruheposition (Fig. 1 und 2) in eine ausgeschwenkte Funktionsposition (Fig. 3 und 4) bewegbar ist, wobei die Bewegung der Trittstufe (2) mit der Bewegung des Türblatts (1) der Türanordnung gekoppelt ist, **dadurch gekennzeichnet, dass** an der ausschließlich in einer horizontalen Ebene bewegbaren Trittstufe (2) ein Abstützarm (4) derart fest angeordnet ist, dass er bei der Bewegung der Trittstufe (2) in die ausgeschwenkte Funktionsposition in den Bereich unterhalb eines am Fahrzeug-Chassis angeordneten Stützlagers (5) einschwenkt, an dessen Unterseite er sich in der Funktionsposition abstützt.

2. Schwenktritt nach Anspruch 1, **dadurch gekennzeichnet, dass** das Stützlager (5) eine fest mit dem Fahrzeug-Chassis verbundene Grundplatte (5.1) aufweist, an der eine horizontal ausgerichtete und in vertikaler Richtung verstellbare Abstützplatte (5.2) angeordnet ist.

3. Schwenktritt nach Anspruch 2, **dadurch gekennzeichnet, dass** am Abstützarm (4) ein gegenüber der Oberseite des Abstützarms (4) erhöhtes Gegenlager (4.1) derart angeordnet ist, dass es in der Funktionsposition der Trittstufe (2) an der Unterseite der Abstützplatte (5.2) anliegt.

4. Schwenktritt nach Anspruch 3, **dadurch gekennzeichnet, dass** an der Oberseite des Abstützarms (4) unmittelbar vor dem Gegenlager (4.1) eine nach oben weisende, in Richtung auf die Oberfläche des Gegenlagers (4.1) unter einem vorgegebenen Winkel ansteigende und an diese anschließende Aufgleitfläche (4.2) angeordnet ist.

5. Schwenktritt nach einem der Ansprüche 1 bis 4, **dadurch gekennzeichnet, dass** am Fahrzeug-Chassis und/oder an der Trittstufe eine Zentriervorrichtung (6) angeordnet ist, durch welche die Trittstufe (2) in der Ruheposition zentriert und fixiert ist.

6. Schwenktritt nach einem der Ansprüche 1 bis 5, **dadurch gekennzeichnet, dass** die Trittstufe (2) über ein Anlenkgestänge (3) mit dem Türblatt (1) der Türanordnung gekoppelt ist.

## Claims

1. A pivotal boarding step for a door arrangement on a local public transport vehicle with a step (2) that is movable from an inward pivoted position of rest (Fig. 1 and 2) to an outward pivoted function position (Fig. 3 and 4) about a vertical pivotal axis (2.1) carried on the chassis of the vehicle, the movement of the step (2) being coupled to the movement of the door leaf (1) of the door arrangement, **characterized in that**, on said step (2), which is solely movable in a horizontal plane, there is solidly disposed an abutment arm (4) in such a manner that it pivots inward into the region located underneath a supporting bearing (5) disposed on the chassis of the vehicle when the step (2) is moved into the outward pivoted function position, said abutment arm abutting the underside of said supporting bearing in the function position.

2. The pivotal boarding step as set forth in claim 1, **characterized in that** the supporting bearing (5) comprises a base plate (5.1) which is solidly connected to the chassis of the vehicle and on which there is disposed a horizontally oriented and vertically adjustable abutment plate (5.2).

3. The pivotal boarding step as set forth in claim 2, **characterized in that** a counter bearing (4.1) that is raised with respect to the upper side of the abutment arm (4) is disposed on said abutment arm (4) in such a manner that it fits against the underside of the abutment plate (5.2) in the function position of the step (2).

4. The pivotal boarding step as set forth in claim 3, **characterized in that** a glide surface (4.2) pointing directly upward is disposed on the upper side of the abutment arm (4), directly before the counter-bearing (4.1), said glide surface rising at a given angle towards the surface of the counter-bearing (4.1) and being adjoined therewith.

5. The pivotal boarding step as set forth in any one of the claims 1 through 4, **characterized in that** a centering device (6) for centering and fixing the step (2) in the position of rest is disposed on the chassis of the vehicle and/or on the step.

6. The pivotal boarding step as set forth in any one of the claims 1 through 5, **characterized in that** the step (2) is coupled with the door leaf (1) of the door arrangement via an articulation linkage (3).

## Revendications

1. Marchepied pivotant pour un agencement de porte sur un véhicule de transport public, comprenant une marche (2) apte à être déplacée, sur un axe vertical de pivotement (2.1) logé sur le châssis du véhicule, depuis une position de repos où elle est pivotée vers l'intérieur (figures 1 et 2) dans une position fonctionnelle où elle est pivotée vers l'extérieur (figures 3 et 4), le déplacement de la marche (2) étant couplé au déplacement du vantail de porte (1) de l'agencement de porte, **caractérisé par le fait que** sur ladite marche (2) déplaçable exclusivement dans un plan horizontal est solidarisé un bras de support (4) de telle manière que, lorsque la marche (2) est déplacée dans la position fonctionnelle où elle est pivotée vers l'extérieur, il pivote dans la zone au-dessous d'un appui (5) disposé sur le châssis du véhicule, sur la face inférieure duquel il s'appuie dans la position fonctionnelle.

2. Marchepied pivotant selon la revendication 1, **caractérisé par le fait que** ledit appui (5) présente une plaque de base (5.1) solidaire du châssis du véhicule, sur laquelle est disposée une plaque d'appui (5.2) orientée horizontalement et réglable dans la direction verticale.

3. Marchepied pivotant selon la revendication 2, **caractérisé par le fait qu'**un contre-appui (4.1) élevé par rapport à la face supérieure du bras de support (4) est disposé sur ledit bras de support (4) de telle manière que, lorsque la marche (2) se trouve dans la position fonctionnelle, il s'appuie sur la face inférieure de ladite plaque d'appui (5.2).

4. Marchepied pivotant selon la revendication 3, **caractérisé par le fait que** sur la face supérieure du bras de support (4), directement devant le contre-appui (4.1), est disposée une surface de glissement en rampe (4.2) qui montre vers le haut, monte à un angle donné en direction de la surface du contre-appui (4.1) et est contiguë à cette dernière.

5. Marchepied pivotant selon l'une quelconque des revendications 1 à 4, **caractérisé par le fait que** sur le châssis du véhicule et/ou sur la marche est disposé un dispositif de centrage (6) par l'intermédiaire duquel ladite marche (2) est centrée et fixée dans la position de repos.

6. Marchepied pivotant selon l'une quelconque des revendications 1 à 5, **caractérisé par le fait que** ladite marche (2) est couplée par le biais de tringles d'articulation (3) au vantail de porte (1) de l'agencement de porte.
